# EUROPEAN PATENT APPLICATION

(11) **EP 1 748 352 A2**
(43) Date of publication of application: **31.01.2007**
(21) Application number: 06013942.5
(22) Date of filing: 05.07.2006
(51) Int. Cl.: G06F 3/023

(54) **Apparatus and method of inputting a character**

(30) Priority: 07.07.2005 KR 20050060998
(71) Applicant: Samsung Electronics Co., Ltd., Suwon-si Gyeonggi-do (KR)
(72) Inventor: Chung, Hyun-Jun, Seoul (KR)
(74) Representative: Grünecker, Kinkeldey, Stockmair & Schwanhäusser Anwaltssozietät

(57) **Abstract**

Provided is a method of inputting a character in a mobile terminal. According to the method, when a character button is pressed, a first character is displayed among characters printed on the pressed character button. After that, when a function button is pressed subsequently to pressing of the character button, a character that corresponds to the pressed function button among the characters printed on the character button is displayed.

## Description

The present invention relates to an improved method of inputting a character in a mobile terminal, and in particular, to a method of inputting a character by pressing buttons a maximum of two times.

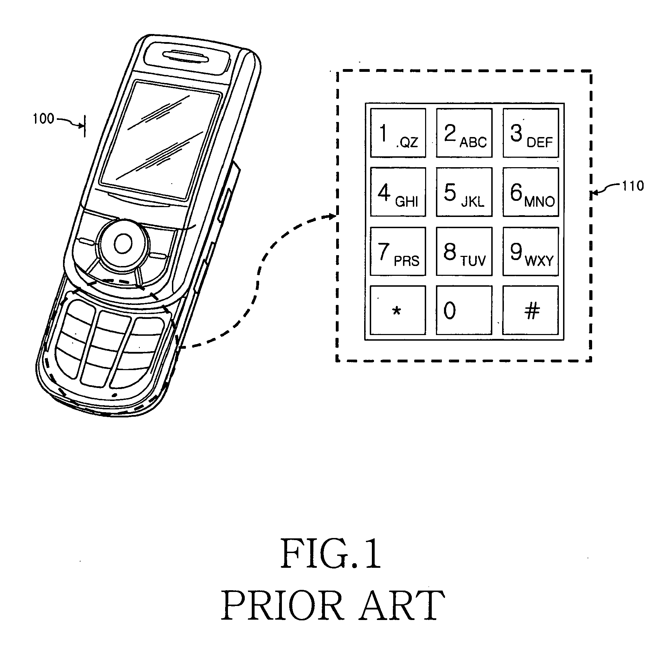

A conventional method of inputting a character will be described with reference to FIG. 1, which illustrates a conventional mobile communication terminal 100 and an English character arrangement of a keypad 110. Here, 1~9 buttons in the keypad 110 corresponds to two or three characters.

According to the conventional method of inputting the English character, three characters are assigned to most buttons in the keypad 110. A user should press the same button three times when inputting the last assigned character. It requires a standby time that a user waits for a while to input the last assigned character. That is, to input Z, C, F, I, L, O, S, V, and Y, each of which is assigned as a third character on each button, a user should press the relevant button three times. A user should move a cursor using a direction button located on the exterior of a 3x4 keypad to input the three characters successively assigned to the same button.

For example, when a user inputs a word "school" a user should press 7, 7, 7, 2, 2, 2, 4, 4, 6, 6, 6, press a direction button or wait for a while, and then continue to press 6, 6, 6, 5, 5, and 5. That is, pressing buttons seventeen times or eighteen times are required.

The best way to save time for inputting characters is to use a keypad (e.g., a QWERTY keyboard) having a complete character set. However, it is very difficult to provide a keypad having the complete character set to the mobile terminal which is gradually downsized.

Since a user generally favors a simple mobile terminal and so uses a keypad having a 3x4 numerical button arrangement, the number of buttons is limited, which makes it difficult for a user to efficiently and conveniently input a character.

Therefore, a desirable method is one that enables a user to input a character with fewer number of times of pressing buttons when a user uses the conventional 3x4 matrix keypad having the limited number of buttons, is required.

It is the object of the present invention to provide a method of inputting a character by pressing buttons a maximum of two times.

This object is solved by the subject matter of the independent claims.

Preferred embodiments are defined in the dependent claims.

According to an aspect of the present invention, there is provided a mobile terminal having a character input apparatus, the mobile terminal including: a keypad having character buttons on each of which a plurality of characters are printed, for inputting characters, and function buttons for selecting one of the plurality of characters printed on each of the character buttons; a display unit for displaying characters inputted through the keypad; and a controller for outputting to the display unit a first character among the characters printed on a character button when the character button of the keypad is pressed, and for outputting a character that corresponds to a function button among the characters printed on the character button when the function button is pressed subsequently to pressing of the character button.

According to another aspect of the present invention, there is provided a method of inputting a character in a mobile terminal, the method including displaying a first character among characters printed on each of character buttons when one of the character buttons is pressed; and when a function button is pressed subsequently to pressing of a character button, displaying a character that corresponds to the function button among the characters printed on the character button.

To achieve the above, the embodiments can be modified and other components may be added thereto. Also, various embodiments may also be implemented.

The accompanying drawings, which are included to provide a further understanding of the invention and are incorporated herein and constitute a part of this application, illustrate embodiment(s) of the invention and together with the description serve to explain the principle of the invention. In the drawings:

FIG. 1 is a view illustrating a conventional art mobile communication terminal and a character arrangement of an English character keypad of the terminal;

FIG. 2 is a view illustrating a construction where function buttons are arranged on an upper side in a mobile communication terminal and a character arrangement of an English character keypad of the terminal according to the present invention;

FIG. 3 is a view illustrating a construction where function buttons are arranged on a right side in a mobile communication terminal and a character arrangement of an English character keypad of the terminal according to the present invention;

FIG. 4 is a view illustrating a construction where function buttons are arranged on a left side in a mobile communication terminal and a character arrangement of an English character keypad of the terminal according to the present invention;

FIG. 5 is a block diagram illustrating a portable terminal including a character input apparatus according to the present invention; and

FIG. 6 is a flowchart illustrating a method of inputting a character according to the present invention.

Reference will now be made in detail to the preferred embodiments of the present invention, examples of which are illustrated in the accompanying drawings. A detail description of well-known features will be omitted for conciseness.

A method of inputting a desired character by pressing buttons a maximum of two times in a mobile terminal according to the present invention will be described below in detail.

Generally, a keypad includes numeric keys of digits 0-9 and a plurality of communicated-related control and terminal control-related buttons such as a Cancel (Delete) key, a Confirmation key, a Send key, an End key, a Mode Switch key, and a Direction key to provide a button input that corresponds to a button pressed by a user to a controller of the mobile terminal.

Only a portion containing a 3x4-sized numeric key according to the present invention is illustrated and other portions are the same as those of a general mobile terminal.

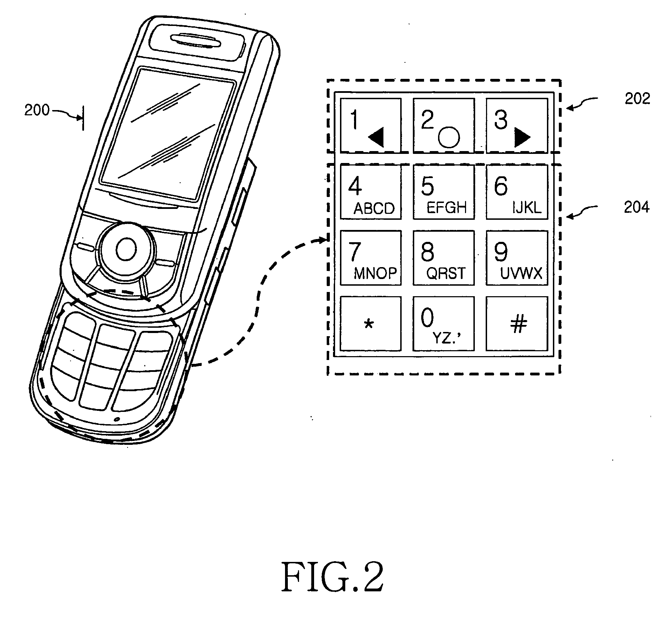

An English character keypad that enables a user to input a character by pressing buttons a maximum of two times will be described as an embodiment for realizing the purpose of the present invention with reference to FIG. 2. FIG 2 is a view illustrating construction where function buttons 202 are arranged on an upper side and character buttons 204 are arranged on a lower side in a mobile communication terminal 200 according to an embodiment of the present invention.

Hereunder, the function buttons may also be called character location buttons. The function buttons can be positioned on any location within the keypad, and an alphabet arrangement assigned on each of the character buttons can also change. A language used for the keypad can be any Roman alphabet-based language. Various modifications may be made to the arrangement and the number of the function buttons and the character buttons within the scope of the present invention.

The number of function buttons may be one. In this case, a function button may be pressed more than one time to select one of the characters assigned to the same character button.

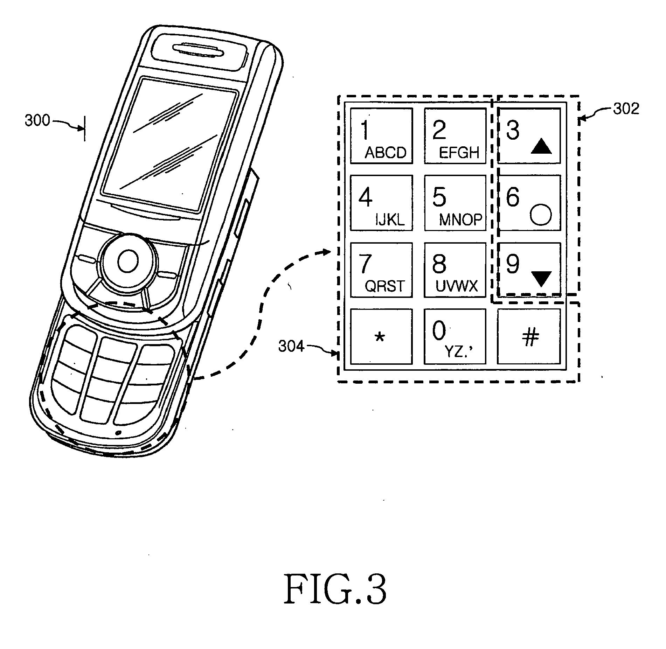

FIG. 3 is a view illustrating a construction where function buttons 302 are arranged on one side and character buttons 304 are arranged on a opposite side in a mobile communication terminal 300 according to another embodiment of the present invention.

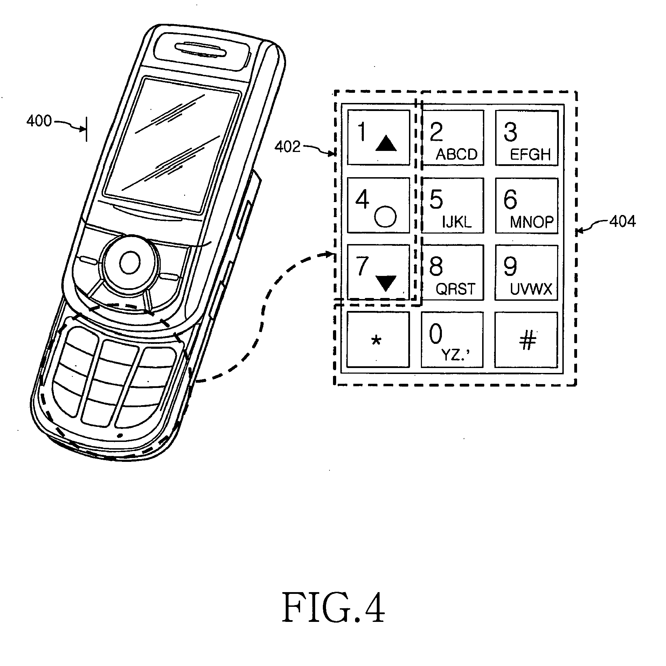

FIG. 4 is a view illustrating a construction where function buttons 402 are arranged on one side and character buttons 404 are arranged on the opposite side in a mobile communication terminal 400 according to another embodiment of the present invention.

Referring to FIG. 3, functions are assigned to buttons 3, 6, and 9, and characters are assigned to buttons 1, 2, 4, 5, 7, 8, and 0. "▲" printed on a function button 3 is for selecting a second character among four characters printed on a character button, "O" printed on a function button 6 is for selecting a third character among four characters printed on a character button, and "▼" printed on a function button 9 is for selecting a fourth character among four characters printed on a character button.

Referring to FIG. 4, functions are assigned to buttons 1, 4, and 7, and characters are assigned to buttons 2, 3, 5, 6, 8, 9 and 0. "▲" printed on a function button 1 is for selecting a second character among four characters printed on a character button, "O" printed on a function button 4 is for selecting a third character among four characters printed on a character button, and "▼" printed on a function button 7 is for selecting a fourth character among four characters printed on a character button.

As described above, the function buttons 202 of FIG. 2, the function buttons 302 of FIG. 3, and the function buttons 402 of FIG. 4 are the same with respect to their functions. Also, the character buttons 204 of FIG. 2, the character buttons 304 of FIG. 3, and the character buttons 404 of FIG. 4 are the same with respect to their functions.

Each of the function buttons on the keypad is a button for selecting one of the characters printed on each of the character buttons after the corresponding character button is pressed.

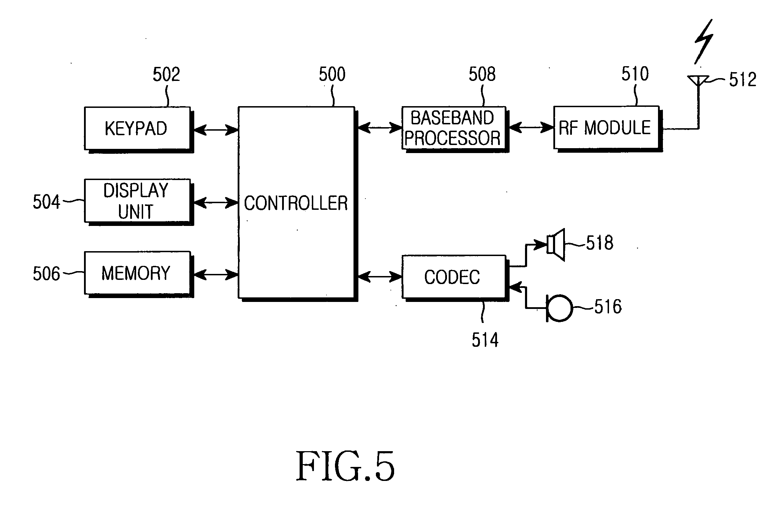

A mobile terminal including the keypad illustrated in FIGS. 1 through 4 will now be descried in detail with reference to FIG. 5.

FIG. 5 is a block diagram illustrating a portable (mobile) terminal including a character input apparatus according to the present invention. Referring to FIG. 5, the mobile terminal includes a controller 500, a keypad 502, a display unit 504, a memory 506, a baseband processor 508, a radio frequency (RF) module 510, an antenna 512, a coder-decoder (codec) 514, a microphone 516, and a speaker 518.

The controller 500 controls an overall operation of the portable terminal. For example, the controller 500 processes and controls a voice communication and a data communication, and receives a character input through pressing of a character button on the keypad , changes a input character into a character that corresponds to a pressed function button when the function button is pressed as a result of checking whether the function button is pressed to output the changed character, and directly outputs a character inputted through the pressing of the character button when the function button is not pressed. A detailed description about the general process and control operations of the controller 500 will be omitted for conciseness.

The keypad 502 includes numeric keys of digits 0-9 and a plurality of function keys, such as a Menu key, a Cancel (Delete) key, a Conformation key, a Talk key, an End key, an Internet Connection key, and Navigation keys (▲/▼/◄/►) to provide key input data that corresponds to a key pressed by a user to the controller 500. In addition to the general functions, the keypad 502 further includes character buttons assigned a plurality of characters and function buttons for selecting one character among the characters assigned to each of the character buttons when a user inputs a character to provide key input data that corresponds to a key pressed by a user to the controller 500.

The display unit 504 displays includes, but are not limited to, status information (or indicator) generated during operations, numerals and characters, moving pictures and still pictures. A color liquid crystal display (LCD) may be used for the display unit 504.

The memory 506 stores a program for controlling an overall operation of the mobile terminal. Also, the memory 506 temporarily stores data generated during operations and complementary data (e.g., telephone number, SMS message, picture data, and etc.).

The RF module 510 down-converts the frequency of an RF signal received through the antenna 512 to provide the down-converted signal to the baseband processor 508, and up-converts the frequency of a baseband signal from the baseband processor 508 to transmit the up-converted signal through the antenna 512. The baseband processor 508 processes a baseband signal transmitted and received between the RF module 510 and the controller 500. For example, during a transmission operation, the baseband processor 508 channel-codes and spreads data to be transmitted. During a reception operation, the baseband processor 508 despreads and channel-decodes a received signal.

The codec 514 connected to the controller 500, and the microphone 516 and the speaker 518 connected to the codec 514 serve as an audio input/output block for a voice communication. The controller 500 produces Pulse Coded Modulation (PCM) data and the codec 514 converts the PCM data into analog audio signals. The analog audio signals are outputted through the speaker 518. Also, the codec 514 converts audio signals received through the microphone 516 into PCM data and provides the PCM data to the controller 500.

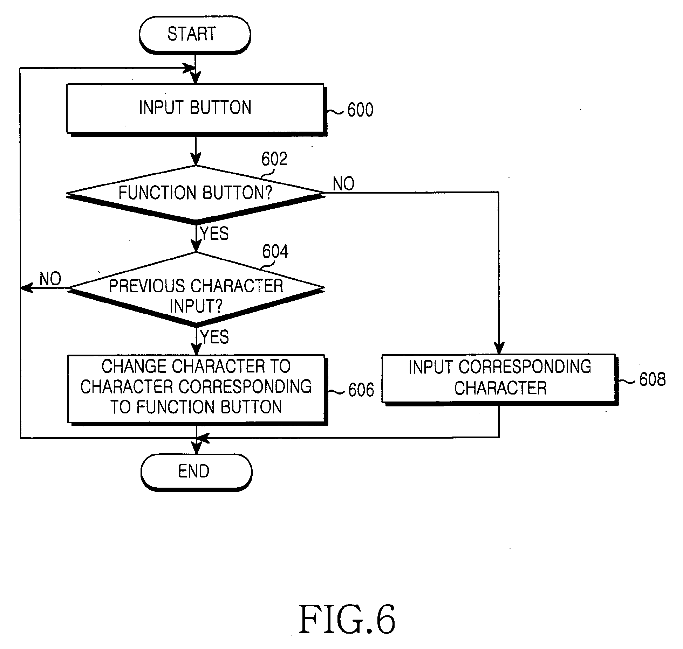

FIG. 6 is a flowchart illustrating a method of inputting a character according to the present invention.

Referring to FIG. 6, in operation 600 a controller 500 of a mobile terminal detects pressing of a button on a keypad during a character input mode, and in operation 602 the controller 500 checks whether the pressed button is a function button. In operation 608, when the controller 500 determines in operation 602 that the pressed button is not the function button but is rather a character button the controller 500 outputs a first character among characters assigned to the character button to a display unit and waits for pressing of a button.

In operation 604, when the pressed button, which has been checked by the controller 500, is the function button in the operation 602, the controller 500 checks whether a previous input has been a character input through pressing of the character button. In operation 606, when the previous input has been the character input through the pressing of the character button, the controller 500 changes a character inputted through the pressing of the character button into a character that corresponds to the function button to output the changed character to the display unit 504.

An example will be described below with reference to the keypad of FIG. 2. When a button 5 on the keypad is pressed, "E", which is a first character printed on the button 5, is inputted in the operation 608 because this button is a character button. After that, the controller 500 waits for pressing of a button again. When the controller 500 detects pressing of another button in the operation 600, the controller 500 determines whether the pressed button is a function button in the operation 602. When the pressed button is a function button 1 as a result of the determination, the controller 500 changes "E", which is a previous character, into "F".

When the pressed button is a function button 2, not the function button 1, the controller changes "E", which is a previous character, into "G". When the pressed button is a function button 3, not the function button 2, the controller changes "E", which is a previous character, into "H".

Theses operations are summarized as Table 1 below.

**Table 1**

| | | | | | | | |
|---|---|---|---|---|---|---|---|
| Character button | 4 | 5 | 6 | 7 | 8 | 9 | 0 |
| Function button | A | E | I | M | Q | U | Y |
| Function button + 1 | B | F | J | N | R | V | Z |
| Function button + 2 | C | G | K | O | S | W | . |
| Function button + 3 | D | H | L | P | T | X | ' |

When a user inputs a word "school", which has been taken for example above, seventeen times or eighteen times of pressing of buttons are required as described above. According to the present invention, only twelve times of pressing of buttons (8, 2, 4, 2, 5, 3, 7, 2, 7, 2, 6, and 3) are required. Also, even when inputting the same character, a user does not need to wait for a while or move a cursor.

The present invention provides a method of inputting a character in a mobile terminal, the method including: displaying a first character among characters printed on character buttons when one of the character buttons is inputted; and displaying a character that corresponds to a function button among the characters printed on the character buttons when the function button is inputted after a character button is inputted. The present invention enables a user to input a character by pressing buttons a maximum of two times, thereby providing convenience to a user inputting a character.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A character input apparatus comprising:
a keypad having a plurality of character buttons to each of which a plurality of characters correspond, and at least one function button for selecting one of the characters assigned to the same character button; and
a controller for outputting a first character assigned to the character button when the character button is first pressed, and for outputting a character selected by the function button when the function button is pressed.

2. The character input apparatus of claim 1, further comprising a display unit for displaying characters.

3. The character input apparatus of claim 1 or 2, wherein the function buttons are located in a first column, a last column, a first row or a last row in a keypad matrix.

4. A method of inputting a character in a mobile terminal, the method comprising:
displaying a first character among characters printed on one of character buttons when the character button is pressed; and
when a function button is pressed subsequently to pressing of a character button, displaying a character that corresponds to the function button among the characters printed on the character button.

5. The method of claim 4, wherein the function buttons are located in a first column, a last column, a first row or a last row in a keypad matrix.

6. A method of inputting a character in a mobile terminal including a keypad that has three function buttons and a plurality of character buttons, the method comprising:
displaying a first character among characters printed on a character button when one of the character buttons is pressed; and
displaying a corresponding character among the characters printed on the character button when one of function buttons is pressed subsequently to pressing of the character button.

7. The method of claim 6 further comprising:
displaying another corresponding character among the characters printed on the character button when another function button is pressed.

8. The method of claim 6 or 7, wherein four characters are assigned on each of the character buttons.

9. The method of one of claims 6 to 8, wherein the characters printed on each of the character buttons are Roman alphabet-based characters.

10. A mobile terminal comprising:
a keypad having a plurality of character buttons to each of which a plurality of characters correspond, and at least one function button for selecting one of the characters assigned to the same character button; and
a controller for outputting a first character assigned to the character button when the character button is first pressed, and for outputting a character selected by the function button when the function button is pressed.

11. The mobile terminal of claim 10, wherein the function buttons of the keypad are located in a first column, a last column, a first row or a last row in a keypad matrix.

12. A character input apparatus comprising:
a keypad having a plurality of character buttons to each of which a plurality of characters correspond, and at least one character location button for selecting one of the characters printed on the same character button; and
a controller for outputting a first character printed on the character button when the character button is first pressed, and for outputting a character selected by the character location button when the character location button is pressed.

13. The character input apparatus of claim 12, further comprising a display unit for displaying characters.

14. A method of inputting a character in a mobile terminal, the method comprising:
selecting a first character among characters assigned to one of character buttons when the character button is pressed; and
when a function button is pressed subsequently to pressing of a character button, selecting a character that corresponds to the function button among the characters printed on the character button.

15. The method of claim 14, wherein the function buttons are located in a first column, a last column, a first row or a last row in a keypad matrix.

16. A method of inputting a character in a mobile terminal including a keypad that has three function buttons and a plurality of character buttons, the method comprising:
selecting a first character among characters printed on a character button when one of the character buttons is pressed; and
selecting a corresponding character among the characters printed on the character button when one of function buttons is pressed subsequently to pressing of the character button.

17. The method of claim 16 further comprising:
selecting another corresponding character among the characters printed on the character button when another function button is pressed.

18. The method of claim 16, wherein four characters are assigned on each of the character buttons.

19. The method of claim 16, wherein the characters printed on each of the character buttons are Roman alphabet-based characters.

20. A mobile terminal comprising:
a keypad having a plurality of character buttons to each of which a plurality of characters correspond, and at least one character location button for selecting one of the characters printed on the same character button; and
a controller for outputting a first character printed on the character button when the character button is first pressed, and for outputting a character selected by the character location button when the character location button is pressed.
